# EUROPÄISCHE PATENTSCHRIFT

(11) **EP 1 354 189 B1**
(45) Veröffentlichungstag und Bekanntmachung des Hinweises auf die Patenterteilung: **25.04.2007**
(21) Anmeldenummer: 02701262.4
(22) Anmeldetag: 22.01.2002
(51) Int. Cl.: G01N 21/35, G01N 33/487, G01N 27/416

(54) **SCHNELLTEST FÜR BIOLOGISCHE SUBSTANZEN MITTELS FTIR**
RAPID TEST FOR BIOLOGICAL SUBSTANCES USING FTIR
ESSAI RAPIDE POUR SUBSTANCES BIOLOGIQUES PAR SPECTROMETRIE A L'INFRAROUGE AVEC TRANSFORMATION DE FOURIER

(30) Priorität: 22.01.2001 DE 10102743
(43) Veröffentlichungstag der Anmeldung: 22.10.2003
(73) Patentinhaber: Wolf, Andreas, 55218 Ingelheim (DE); Masuch, Ralf, 79098 Freiburg (DE); Seidel, Robert, 79110 Freiburg (DE)
(72) Erfinder: Wolf, Andreas, 55218 Ingelheim (DE); Masuch, Ralf, 79098 Freiburg (DE); Seidel, Robert, 79110 Freiburg (DE)
(74) Vertreter: Müller-Boré & Partner Patentanwälte
(86) Internationale Anmeldenummer: PCT/EP2002/000589
(87) Internationale Veröffentlichungsnummer: WO 2002/057753

(56) Entgegenhaltungen:
- EP-A- 0 644 412
- DE-C- 19 739 126
- US-A- 5 473 160
- MOSS D ET AL: "REDOX-LINKED CONFORMATIONAL CHANGES IN PROTEINS DETECTED BY A COMBINATION OF INFRARED SPECTROSCOPY AND PROTEIN ELECTROCHEMISTRY EVALUATION OF THE TECHNIQUE WITH CYTOCHROME C" EUROPEAN JOURNAL OF BIOCHEMISTRY, BERLIN, DE, Bd. 187, 1990, Seiten 565-572, XP001040731 ISSN: 0014-2956 in der Anmeldung erwähnt
- RAHMELOW ET AL: 'Infrared spectroscopy in aqueous solution: difficulties and accuracy of water subtraction' APPLIED SPECTROSCOPY Bd. 51, Nr. 2, 1997, USA, Seiten 160 - 170, XP000698653
- VENYAMINOV S.Y. ET AL: 'Water (H2O and D2O) molar absorpticity in the 1000-4000 cm-1 range and quantitative infrared spectroscopy of aqueous solutions' ANALYTICAL BIOCHEMISTRY Bd. 248, 1997, Seiten 234 - 245
- EYSEL H.H. ET AL: 'A novel diagnostic test for arthritis: multivariate analysis of infrared spectra of synovial fluid' BIOSPECTROSCOPY Bd. 3, 1997, Seiten 161 - 167
- RAHMELOW K.: 'Von der Signalverarbeitung bis zur Sekundärstrukturbestimmung von Proteinen', 1995, HOCHSCHULVERLAG, FREIBURG (GERMANY) * Seiten 47-58, Absatz 5.1-5.6 *

## Beschreibung

Die vorliegende Erfindung betrifft ein Verfahren zur Bestimmung des Zustands einer biologischen Flüssigkeit mit Hilfe der Aufnahme des IR-Spektrums einer Probe der biologischen Flüssigkeit. Hierbei kann die biologische Flüssigkeit in ihrer nativen Form untersucht werden. Das erfindungsgemäße Verfahren ist beispielsweise zum Nachweis krankhafter Zustände in Organismen verwendbar.

Verschiedene Krankheiten können derzeit mit einer ausreichend hohen Sicherheit nur mit aufwendigen Tests nachgewiesen werden, die zudem einen hohen Zeitaufwand erfordern. So muß beim Myokardinfarkt (Herzinfarkt) in kürzester Zeit eine Diagnose gestellt werden können. Es kommt zur plötzlich auftretenden Myokardnekrose, d.h. dem Untergang eines umschriebenen Herzmuskelbezirks, die durch Anstieg spezifischer Enzyme (CK Isoenzym, CPK, halbspezifische Enzyme, LDH (alpha-hpdh)) spätestens einen Tag nach dem Infarkt diagnostiziert werden kann. In vielen Fällen können jedoch insbesondere kleine Myokardinfarkte schwer diagnostiziert werden, sodaß die notwendige Behandlung ausbleibt und es später zu einem schweren Myokardinfarkt kommt. Bei rechtzeitiger und zuverlässiger Diagnose könnte dies vermieden werden. Darüber hinaus ist es bisher bei einigen Krankheiten nur möglich, ein zuverlässiges Ergebnis zur erhalten, wenn der Test *post mortem* durchgeführt wird.

Beispielsweise können zuverlässige Tests zum Nachweis von Prionenerkrankungen, z.B. zur Erkennung von BSE (bovine spongiforme Enzephalopathie) oder des Creutzfeld-Jacob-Syndroms, nur am toten Tier bzw. Menschen, insbesondere durch mikroskopische Untersuchung von Hirnschnitten oder durch aufwendige histochemische Antikörpertests, durchgeführt werden. Daher sind zuverlässige Ergebnisse zur Ausbreitung der Erreger erst nach Ausbruch der Krankheit erhältlich. Darüber hinaus sind diese Tests zeitaufwendig und erfordern einen hohen Aufwand an hochqualifiziertem Personal und sind damit sehr kostspielig.

Es besteht daher ein dringender Bedarf nach zuverlässigen Tests bei den vorstehend genannten Krankheiten, insbesondere Prionenkrankheiten, sowie bei einer Vielzahl von klinisch relevanten Änderungen der Körperzustände, die in einfacher Weise am lebenden Organismus ohne lebensbedrohliche Eingriffe für das Tier oder den Menschen zur Entnahme der zu analysierenden Proben durchgeführt werden können.

In EP-A-0 644 412 und in US5473160 wird ein Verfahren zur Analyse klinisch relevanter Probenflüssigkeiten und Suspensionen offenbart, welches die Aufnahme von Infrarotspektren getrockneter Proben der zu untersuchenden Flüssigkeiten bzw. Suspensionen und deren Auswertung unter Verwendung von Multiparameterauswertungsverfahren umfaßt. In dem Auswertungsverfahren werden die zu analysierenden Proben Klassen zugeordnet. Das Auswertungsverfahren wird mit Proben, die bekannten Klassen entsprechen, aufbereitet, um die Parameter des Bewertungsverfahrens derart anzupassen, daß Proben unbekannter Klassifikation den Klassen zugeordnet werden können. Insbesondere werden die Infrarotspektren gemäß EP-A-0 644 412 an einem getrockneten Film der Probe gemessen. US 5473160 offenbart, ferner, das Nutzen von Informationen der aus biologischen Flüssigkeiten gemessenen Wasserabsorptionsbanden.

Dieses spektroskopische Verfahren weist jedoch den inhärenten Nachteil auf, daß die Proben zur Messung getrocknet werden müssen, weshalb die Spektren von nicht-nativen, inhomogenen Proben aufgenommen werden. Dies erfordert daher zusätzliche Verfahrensschritte bei der Probenvorbereitung, die einen höheren Zeitaufwand mit sich bringen sowie eine Automatisierung des Verfahrens erheblich erschweren, und es gehen Informationen, die nur im nativen Zustand der Probe zugänglich sind, verloren. Darüber hinaus zeichnet sich dieses Verfahren durch eine hohe Zuordnungsfehlerquote aus. Insbesondere bei epidemiologisch signifikanten krankhaften Zuständen wie BSE ist jedoch die zuverlässige Zuordnung zu einem positiven oder negativen Befund entscheidend.

Somit liegt der vorliegenden Erfindung die Aufgabe zugrunde, ein neues System zur Bestimmung des Zustands von biologischen Flüssigkeiten, beispielsweise von Körperflüssigkeiten in Organismen, bereitzustellen, welches beispielsweise zum Nachweis krankhafter Zustände bei lebenden Tieren oder Menschen geeignet ist, und welches die Nachteile von bekannten IR-Verfahren vermeidet. Bedingt durch das große Probenaufkommen, insbesondere in der klinischen Diagnostik, ist erfindungsgemäß die Bereitstellung eines Verfahrens erforderlich, welches einen hohen Probendurchsatz mit guter Reproduzierbarkeit ermöglicht.

Diese Aufgabe wird durch die in den Ansprüchen gekennzeichneten Ausführungsformen der vorliegenden Erfindung gelöst.

Der Begriff "biologische Flüssigkeit" umfaßt sämtliche Flüssigkeiten in denen biologisch relevante Substanzen vorliegen. Vorzugsweise wird das erfindungsgemäße Verfahren an Körperflüssigkeiten von Organismen durchgeführt. Beispiele solcher Körperflüssigkeiten sind Blut, Blutplasma, Blutserum, Hämolysat, Liquor, Urin, Lymphflüssigkeit, Synovialflüssigkeit, Speichel, Sperma, Fruchtwasser, Tränenflüssigkeit, Zystenflüssigkeit, Schweißdrüsensekret und Gallenflüssigkeit . Des weiteren umfaßt der Begriff "biologische Flüssigkeit" auch Suspensionen von Kulturzellen, Bakterien und Viren sowie Medienüberstände und Lysate, welche aus Kulturen der vorstehend genannten Zellen, Bakterien bzw. Viren gewonnen werden. Durch Anwendung des erfindungsgemäßen Verfahrens auf die vorstehend genannten Zellen, Bakterien bzw. Viren, können diese Organismen bzw. Erreger klassifiziert werden. So kann beispielsweise eine unbekannte Probe dem Vorliegen eines bestimmten Zelltyps, eines bestimmten Bakterienstamms oder eines bestimmten Virusstamms zugeordnet werden. Auf diese Weise kann beispielsweise ein in einer Suspension oder in einem Medium bzw. einer anderen Flüssigkeit vorliegender bestimmter Bakterienstamm aus einer Vielzahl von Bakterienstämmen erkannt werden.

Der Begriff "Organismus" umfaßt einzelne Zellen, wie prokaryotische und eukaryotische Zellen, sowie mehrzellige Organismen, insbesondere Pflanzen, Tiere und Menschen. Bevorzugte Organismen sind aus der Gruppe, bestehend aus *Bos taurus, Gallus gallus, Maleagris gallopavo, Mus musculus, Ovis ammon, Rattus norvegicus, Sus scrofa,* (allgemein: Schaf, Huhn, Schwein) und *Homo sapiens,* ausgewählt.

Der Ausdruck "Zustand einer biologischen Flüssigkeit" umfaßt jegliche Werte von Parametern der jeweiligen biologischen Flüssigkeit. Diese Flüssigkeitsparameter können sowohl chemischer als auch physikalischer Natur, beispielsweise pH-Wert, lonenkonzentrationen, Redoxpotentiale usw., sein. Bevorzugte chemische Parameter umfassen beispielsweise die Konzentration von biologischen Substanzen bzw. deren Vorhandensein oder Abwesenheit, wie Proteine, Nukleinsäuren, Fette und Zucker. Weitere chemische Parameter sind die Konzentration von pharmazeutisch wirksamen Substanzen in der jeweiligen biologischen Flüssigkeit. Unter einer "pharmazeutisch wirksamen Substanz" sind beispielsweise sämtliche Arzneistoffe bzw. deren pharmakologisch aktiven Bestandteile sowie Drogen zu verstehen. Weitere bevorzugte Parameter biologischer Flüssigkeiten, die mit dem erfindungsgemäßen Verfahren ermittelt werden können, sind die Gegenwart oder Abwesenheit von Krankheitserregern. Die Krankheitserreger können beispielsweise Eukaryoten, z.B. Pilze, oder Prokaryoten, z.B. Bakterien, sein. Weitere erfindungsgemäß nachweisbare Krankheitserreger umfassen Viren sowie proteinartige Erreger, insbesondere Prionen.

Das erfindungsgemäße Verfahren kann beispielsweise zum Nachweis krankhafter Zustände verwendet werden, was bedeutet, daß die Probe einer Körperflüssigkeit des Organismus dem Zustand "krank" bzw. "mit Befund" oder dem Zustand "nichtkrank" bzw. "ohne Befund" zugeordnet wird. Beispiele krankhafter Zustände, die mit Hilfe des erfindungsgemäßen Verfahrens nachgewiesen werden können, umfassen Diabetes, Arthritis, erhöhter (oder erniedrigter) Cholesterinspiegel, Anämien (z.B. Sichelzellanämie), Krebs, Leberkrankheiten (z.B. Hepatitis), AIDS, Nierenkrankheiten, Gewebsuntergang (z.B. Myokardinfarkt), neurodegenerative Erkrankungen wie Alzheimer, Parkinson, übertragbare spongiforme Enzephalopathien (engl. "transmissible spongiform encephalopathy", TSE) wie BSE, Autoimmunkrankheiten wie Multiple Sklerose (MS), Allergien, Ortikaria (Nesselsucht) und allergisches Asthma. Krankhafte Zustände können auch durch (verbotene) Futtermittel und/oder Futtermittelzusatzstoffe in der Tiermast beispielsweise bei Schweinen und Hühnern hervorgerufen werden.

Zur Bereitstellung der nativen Probe bzw. Proben in den vorstehend genannten Schritten (a) und/oder (e) wird die Körperflüssigkeit für die Messung aufbereitet, beispielsweise von partikulären Bestandteilen befreit. So kann beispielsweise vor der Messung der IR-Spektren Blut zu Blutserum aufbereitet werden. Das erfindungsgemäße Verfahren zeichnet sich somit u.a. dadurch aus, daß die Messung der IR-Spektren in den vorstehend genannten Schritten an homogenen Proben erfolgt. Das Befreien einer Körperflüssigkeit von partikulären Bestandteilen kann beispielsweise eine Zentrifugation und/oder eine Filtration bzw. Ultrafiltration durch eine Membran mit entsprechender Porengröße umfassen.

Durch z.B. Filtration (insbesondere Ultrafiltration), Zentrifugation und/oder Dialyse können beispielsweise im Fall des Nachweises eines krankhaften Zustands auf die Krankheit hin optimierte Fraktionen der Körperflüssigkeit erhalten werden, welche eine größtmögliche krankheitsspezifische Spektralveränderung beinhalten. Dadurch läßt sich die gesamte, hochkomplexe Spektralinformation deutlich vermindern und eröffnet dadurch die Möglichkeit, daß mit Hilfe der Datenanalyse Aussagen über das Krankheitsbild getroffen werden können. Ein Beispiel der Komplexitätsverminderung ist die elektrochemisch induzierte Differenzanalyse, wobei die Meßzelle darin integrierte Elektroden aufweist. Hierbei können mit Hilfe eines angelegten Potentials bestimmte Inhaltsstoffe, insbesondere Biomoleküle wie Proteine (z.B. Häm-Proteine), selektiv in Abhängigkeit ihres Mittelpunktspotentials oxidiert bzw. reduziert werden. Die dadurch induzierten Veränderungen (z.B. elektronischer oder struktureller Art) können als Erkennungsmerkmal verwendet werden. Durch Verändern des angelegten Potentials können somit verschiedene Inhaltsstoffe selektiv verändert werden. Somit kann mit der elektrochemisch induzierten Differenzanalyse aufgrund der Selektion von nur redox-aktiven Komponenten der Körperflüssigkeit und durch geeignete Auswahl des Potentialbereiches eine vorteilhafte Verminderung der komplexen spektralen Information erreicht werden, wobei die Nachweisempfindlichkeit derart gesteigert werden kann, daß Veränderungen einzelner funktioneller Gruppen in Biomolekülen erfaßbar sind. Beispielsweise können bei elektrochemisch induzierten Differenzspektren von roten Blutkörperchen, Hämolysat oder einer Hämoglobinfraktion die Defekte am Protein wie z.B. dem genetisch bedingten Aminosäurenunterschied bei Sichelzellenanämie im Hämoglobin nachgewiesen werden und durch Vergleich mittels einer Multiparameteranalyse als Krankheit erkannt werden. Der Nachweis erfolgt dabei optimiert auf das für Hämoglobin spezifische Mittelpunktspotential.

Die Gesamtabsorptionsspektren und die induzierten Differenzspektren werden sowohl in Ergänzung als auch alleine mittels eines Multiparameteranalyseverfahrens zur Diagnose von Krankheiten verwendet.

Die vorstehend aufgeführten Aufbereitungsschritte verändern den "nativen" Charakter der Proben jedoch nicht. Die zu messende Probe im erfindungsgemäßen Verfahren ist daher dadurch gekennzeichnet, daß die darin befindlichen Bestandteile unter Bedingungen, insbesondere hinsichtlich des Wassergehalts, Salzgehalts, pH-Werts usw., sowie gegebenenfalls der Temperatur, vorliegen, welche denjenigen der Körperflüssigkeit im Organismus entsprechen, dem die Probe entnommen wurde. Dies bedeutet beispielsweise, daß die Biomoleküle (Proteine, Nukleinsäuren usw.), die sich in der entsprechenden Körperflüssigkeit befinden und für die Bestimmung des Zustandes wesentlich sind, nicht denaturiert vorliegen. Dies steht z.B. im Gegensatz zum in EP-A-0 644 412 und US5473160 beschriebenen Verfahren, worin das Trocknen einer Flüssigprobe auf einem Trägermaterial vor der Durchführung einer IR Messung erfolgt.

In einer bevorzugten Ausführungsform des erfindungsgemäßen Verfahrens erfolgt die Messung der IR-Spektren in den vorstehend definierten Schritten (b) und (f) mit Hilfe eines Spektrometers, daß zur Fourier-Transformationslnfrarotspektroskopie (FTIR) ausgelegt ist, wodurch eine schnelle Spektrenaufnahme und -Auswertung ermöglicht wird. Das FTIR-Spektrometer kann beispielsweise an ein IR-Mikroskop gekoppelt sein. Bei der Aufnahme der IR-Spektren können Transmissions- und/oder Reflektionsmessungen durchgeführt werden.

Der Informationsgehalt von IR-Spektren der erfindungsgemäß analysierten Körperflüssigkeiten ist im mittleren IR-Bereich besonders hoch. Daher erfolgt das Messen der IR-Spektren im Schritt (b) und/oder Schritt (f) des vorstehend definierten Verfahrens vorzugsweise bei einer Wellenzahl von 400 bis 7.000 cm⁻¹, mehr bevorzugt von 700 bis 1.900 cm⁻¹.

Erfindungsgemäß werden die im Schritt (b) gemessenen IR-Spektren der nativen Proben, bei denen der Zustand der biologischen Flüssigkeit, z.B. einer Körperflüssigkeit eines Organismus, bekannt ist, im Schritt (c) einem Multiparameteranalyseverfahren unterworfen. Hierzu werden die durch die Messung des jeweiligen IR-Spektrums gewonnenen Wert zunächst digitalisert. Das digitalisierte Spektrum wird dann einem Multiparameteranalyseverfahren bereitgestellt. Erfindungsgemäß verwendbare Multiparameteranalyseverfahren sind beispielsweise multivariate Datenanalyseverfahren, wie lineare Diskriminanzanalysen, neuronale Netze und Clusteranalysen, die als Softwareprogramme im Handel erhältlich sind.

Im Schritt (c) des erfindungsgemäßen Verfahrens wird das Multiparamteranalyseverfahren durch die Verarbeitung der Informationen trainiert, d.h. kalibriert, die in den IR-Spektren der nativen Proben der Körperflüssigkeiten der Organismen, bei denen der Zustand bekannt ist, enthalten sind. Durch die Multiparameteranalyse werden Zuordnungsparameter aus den Datensätzen der IR-Spektren gewonnen, welche eine zuverlässige Klassifizierung bzw. Zuordnung der jeweiligen Proben zu den bekannten Zuständen gewährleisten. Erfindungsgemäß wird zur Kalibirierung des Multiparameteranalyseverfahrens eine Mehrzahl, z.B. 5 bis 1000, vorzugsweise 50 bis 300, von IR-Spektren von Proben mit Hilfe des Multiparameteranalyseverfahrens analysiert, bei denen bekannt ist, daß die zugrundeliegende Körperflüssigkeit z.B. den Zustand A aufweist. Dementsprechend wird eine ebenso große Zahl von IR-Spektren analysiert, bei denen die zugrundeliegende Körperflüssigkeit z.B. den Zustand B aufweist. Die Anzahl der zur Kalibrierung des Multiparameteranalyseverfahrens pro Zustand benötigten Spektren hängt insbesondere davon ab, wie stark sich die Spektren der verschiedenen Zustände voneinander unterscheiden. Im allgemeinen ist es jedoch bevorzugt, das Multiparameterverfahren mit einer größeren Anzahl, z.B. mehr als 100, von Spektren pro Zustand zu kalibrieren, da die Zuordnungsfehlerquote mit der Größe des dem Multiparameteranalyseverfahren zur Verfügung stehenden Datensatzes sinkt. Wie vorstehend ausgeführt, erfolgt die Multiparameteranalyse der IR-Spektren vorzugsweise- mit Hilfe einer Software-gesteuerten Datenverarbeitung. Durch Speichern der erhaltenen Zuordnungsparameter, vorzugsweise auf einem elektronischen Datenträger, stehen diese dann für einen Vergleich mit den entsprechenden Datensätzen eines IR-Spektrums einer Probe einer Körperflüssigkeit, deren Zustand unbekannt ist, bereit.

Somit wird im erfindungsgemäßen Verfahren eine native Probe einer Körperflüssigkeit mit unbekanntem Zustand gemessen, der Multiparameteranalyse unterworfen und anhand eines Vergleichs der Zustandsparameter des IR-Spektrums der unbekannten Probe mit den zuvor erhaltenen und gespeicherten Zustandsparametern der IR-Spektren der bekannten Proben einem Zustand, beispielsweise dem Zustand A oder dem Zustand B, zugeordnet. Selbstverständlich können durch das erfindungsgemäße Verfahren durch geeignete Auswahl der Bezugszustände auch Eichreihen (z.B. Konzentration einer Substanz von 0 bis n Konzentrationseinheiten entsprechend den Zuständen A bis Z) aufgestellt werden, wodurch beispielsweise quantitative Bestimmungen möglich sind. Daher ermöglicht es das erfindungsgemäße Verfahren, bei geeigneter Eichung des Multiparameteranalyseverfahrens auch beispielsweise eine Aussage über den Grad oder das Stadium eines krankhaften Zustands zu treffen, beispielsweise wie stark ein Cholesterinspiegel vom Normalwert abweicht oder in welchem Stadium sich ein Krebsleiden befindet.

Zur Durchführung des vorstehend definierten Verfahrens eignet sich beispielsweise eine Meßapparatur, die ein FTIR-Spektrometer, entsprechende Pumpen und eine geeignete Meßzelle, die zur Aufnahme von FTIR-Spektren einer nativen, flüssigen Probe ausgelegt ist, umfaßt. Aufgrund der erfindungsgemäßen IR-Spektrenaufnahme in den nativen Proben erfolgt die Messung im vorstehend definierten Schritt (b) und/oder Schritt (f) mit Hilfe einer Meßzelle, deren Schichtdicke vorzugsweise 1 bis 30 µm, mehr bevorzugt 3 bis 12 µm, am meisten bevorzugt nicht mehr als 10 µm, beträgt. Die Auswahl der optimalen Schichtdicke für Transmissionszellen für wässrige Proben wird beispielsweise von Rahmelow, K. und Huber, W. (1997) in Appl. Spectrosc. 51, 160-170, beschrieben. Die geringe Schichtdicke ist bei der erfindungsgemäßen Aufnahme der IR-Spektren insbesondere deshalb erforderlich, da bei einer optischen Weglänge von mehr als 12 µm durch das in biologischen Flüssigkeiten vorliegende Wasser der Bereich der Totalabsorption zunimmt und der Informationsgehalt bei über 30 µm für das erfindungsgemäße Verfahren nur noch gering ist.

Als optisches Material sind im erfindungsgemäßen Verfahren generell alle IRtransparenten Materialien für den angegebenen Wellenzahlenbereich oder -teilbereich einsetzbar, vorzugsweise Calciumfluorid (CaF₂), Bariumfluorid (BaF₂), Zinkselenid (ZnSe), Silicium (Si), Germanium (Ge) und dünne Polymerfolien. Die Materialien können gegebenenfalls mit dünnen, wasserunlöslichen Schichten überzogen sein wie z.B. Parylen, PTFE, PE. Hierdurch können der Dünnschichtzelle besondere Eigenschaften verliehen werden. Derartige Materialien dienen beispielsweise der Verringerung der Wechselwirkung des Fenster- und Zellenmaterials mit biologischen Proben oder der Isolierung wasserlöslicher Fenstermaterialien von der wasserhaltigen Probenlösung. Hierdurch wird eine größere Auswahl an optischen Materialien ermöglicht, wodurch ein größerer Spektralbereich zugänglich ist. Es kann daher z.B. auch das wasserlösliche Kaliumbromid (KBr) als Fenstermaterial eingesetzt werden.

Weiterhin können in die Zellen Elektroden integriert sein, wie z.B. in Form von mikrostrukturierten Netzen, welche eine elektrochemisch induzierte Differenzanalyse (Differenzspektroskopie) zulassen. Derartige Meßzellen sind beispielsweise in Moss A.D., Nabedryk, E., Breton, J. and Mäntele, W. (1990) Eur. J. Biochem. 187, 565 - 572, beschrieben.

Für die Meßmethoden können beispielsweise die drei folgenden Ausführungsformen nicht-zerlegbare Flüssigkeits-Dünnschichtzellen verwendet werden:

### Typ 1: nicht zerlegbare mikrostrukturierte Durchflußzelle

Derartige Zellen sind im Handel erhältlich und zeichnen sich durch die folgenden Eigenschaften aus:
- hohe Druckbeständigkeit (z.B. 10-100 bar); vorteilhaft bei hohem Strömungswiderstand beim Befüllen von Durchflußzellen (besonders bei Schichtdicken im Bereich von 1 bis 15 µm);
- geringes Befüllungsvolumen (0,05 bis 3 µl); daher nur sehr geringe Probenmengen geeignet;
- automatisierter Hochdurchsatz möglich; Befüllen und Spülen der Zellen kann sehr schnell erfolgen;
- schnelle Druckrelaxation (< 10 ms); bei hohem Probendurchsatz erforderlich;
- derartige Zellen zeichnen sich trotz wechelnder Druckzustände durch eine gleichbleibende Schichtdicke während der Probenmessung aus; die Abweichung bleibt unterhalb der Nachweisgrenze von IR-Messungen und führt deshalb nicht zu Störsignalen; dadurch wird die Reproduzierbarkeit des erfindungsgemäßen Verfahrens extrem verbessert;
- Integration von mikrostrukturierten Elektroden möglich.

Durch die Integration von Elektroden in der IR-Meßzelle, z.B. mikrostrukturierter Elektroden in der nicht-zerlegbaren Mikro-Durchflußzelle können dem erfindungsgemäßen Verfahren beipielsweise folgende weitere Vorteile verliehen werden:
- Es kann eine Komplexitätsreduktion der Proben auf redox-aktive Komponenten in der Körperflüssigkeit erreicht werden. Es wird eine Datenanalyse aus Gesamtspektrum und detaillierterem (hochaufgelöstes) elektrochemisch induziertem Differenzspektrum mit neuen (zusätzlichen) spektralen Informationen möglich.
- Durch die Integration der Zelle mit mikrostrukturierten Elektroden können abscanbare Potentialintervalle mit den jeweils für ein Potentialintervall spezifischen Spektraländerungen ausgewertet werden.
- Es besteht die Möglichkeit der Auswertung eines auf eine spezifische Krankheit hin optimierten Potentialbereichs mit maximaler, krankheitsspezifischer Spektraländerung.

### Typ 2: nicht zerlegbare mikrostrukturierte Diffusionsmischerzelle

Derartige Meßzellen sind im Stand der Technik bekannt und sind durch die folgenden Eigenschaften gekennzeichnet:
- keine Reinigung nötig, da dieser nach dem Gebrauch weggeworfen werden kann (Einmalzelle);
- gleichbleibende Schichtdicke;
- geringes Probenvolumen notwendig (< 1 µl, z.B. 50 - 200 nl);
- keine schnelle Druckrelaxation und hohe Druckbeständigkeit notwendig da:
   - Einmal-Wegwerfzelle bzw. -array (kein zeitaufwendiges Spülen und Reinigen notwendig; einfache Handhabung beim Umgang mit pathogenen Biomaterial (z.B. bei in die Sicherheitsstufe S2 eingestuften Proben);
   - Befüllung über Kapillarkraft;
- geeignet zum "Point of Care"-Einsatz.

### Typ 3: nicht zerlegbare Kapillarkraft-Dünnschichtzelle

Eine Meßzelle dieses Typs ist in DE 197 39 126 beschrieben und weist die folgenden Eigenschaften auf:
- geringes Probenvolumen (< 5 µl);
- Keine schnelle Druckrelaxation und hohe Druckbeständigkeit notwendig da:
   - Einmal-Wegwerfzelle;
   - Befüllung über Kapillarkraft;
- Integration von mikrostrukturierten Elektroden möglich.

Gemäß einer bevorzugten Ausführungsform des erfindungsgemäßen Verfahrens erfolgen die Meß- und Auswertungsschritte vollautomatisiert mit einem hohen Durchsatz von mehreren tausend, beispielsweise 5.000, Messungen und Auswertungen pro Tag und Gerät. Hierzu kann das erfindungsgemäße Verfahren mit Hilfe einer Meßapparatur durchgeführt werden, bei der die einzelnen Komponenten, wie Pumpen, Probenschleifen, Steuerungsventile, Mischer usw., für den Betrieb bei sehr kleinen Volumina und hohen Drücken ausgelegt sind, wie sie beispielsweise auch in der Hochdruckflüssigkeitschromatographie (HPLC) Verwendung finden. Die Kontrolle dieser einzelnen Komponenten erfolgt vorzugsweise computergesteuert. Die Verwendung von HPLC-Komponenten in Verbindung mit einer Mikro-Durchflußzelle mit einer Schichtdicke von 1 bis 15 µm ermöglicht einen sehr geringen Probenbedarf von vorzugsweise < 20 µl. Mehr bevorzugt sind Durchflußsysteme mit einem Probenbedarf von 1 bis 10 µl, insbesondere 5 µl.

Bei der Durchführung des vorstehend gekennzeichneten Verfahrens, insbesondere unter Verwendung von HPLC-Komponenten, entstehen in Abhängigkeit von der Füllgeschwindigkeit der Meßzelle hohe Drücke von 1 bis 100 bar. Um die Reproduzierbarkeit des erfindungsgemäßen Verfahrens und damit eine zuverlässige Zuordnung des Zustands der untersuchten biologischen Flüssigkeit zu gewährleisten, weist die Meßzelle bei der Spektrenaufnahme trotz der wechselnden hohen Druckbelastung beim Füllen und Spülen der Zelle eine Schichtdickenabweichung von der ursprünglichen Schichtdicke von vorzugsweise weniger als 1 nm auf.

Im einzelnen wird das erfindungsgemäße Verfahren beispielsweise in einer vorstehend genannten Durchflußapparatur wie folgt durchgeführt. Die Proben, z.B. Blutserum, Blutplasma usw., werden über ein Probenschleifenventil bei laufender Pumpe in ein Transportmedium (z.B. Wasser oder eine wässerige Pufferlösung) eingespeist und in die FTIR-Meßzelle transportiert. Sobald sich die Probe in der Meßzelle befindet, wird der Fluß gestoppt und das FTIR-Spektrum der Probe gemessen. Anschließend wird die Zelle mit dem Transportmedium gespült. Durch die Verwendung von Probenschleifenventilen kann die Probenschleife noch während der Messung neu befüllt werden. Hierdurch wird der Probendurchsatz nahezu aussschließlich durch die Meßdauer (im Fall von FTIR-Messungen in der Regel 15 bis 30 Sekunden) begrenzt, wodurch sich das System insbesondere zur Automation bei großer Probenanzahl eignet.

Wie vorstehend ausgeführt, eignet sich das obige System sowohl zur manuellen, halbautomatisierten als auch vollautomatisierten Durchführung des erfindungsgemäßen Verfahrens. Vorzugsweise ist das obige Meßsystem bei einem automatisierten, hohen Probendurchsatz computergesteuert und mit HPLCkompatiblen Komponenten ausgestattet. Dabei kann die Probenaufnahme beispielsweise aus standardisierten Mikrotiterplatten erfolgen. Bei einer automatisierten Ausgestaltung des erfindungsgemäßen Verfahrens erfolgt die Messung der IR-Spektren vorzugsweise mittels der vorstehend aufgeführten nicht-zerlegbaren, mikrostrukturierten Durchflußzelle, in die gegebenenfalls Elektroden zur Durchführung einer elektrochemisch induzierten Differenzanalyse der biologischen Flüssigkeit integriert sein können.

Eine wichtige Anwendung des erfindungsgemäßen Verfahrens zur Bestimmung des Zustands einer Körperflüssigkeit eines Organismus besteht in der Bestimmung der Konzentration bzw. Zusammensetzung beispielsweise einer Körperflüssigkeit, z.B. Auswirkung von Erregern, verbotene Zusätze in Tierfuttermitteln in der Schweinezucht bzw. Rinderzucht, im Blut bzw. Blutserum von Mensch, Schwein und *Bos taurus* (Rind). Ein spezifisches Beispiel ist hier die Bestimmung der Konzentration bzw. der Nachweis der Auswirkungen des Vorhandenseins oder der Abwesenheit von Prionen in einer Körperflüssigkeit, wie beispielsweise einer Körperflüssigkeit, z.B. dem Blut bzw. Blutserum von *Bos taurus* (Rind).

Somit wird in einer Ausführungsform des erfindungsgemäßen Verfahren ein Schnelltest bereitgestellt, der nicht auf dem direkten Nachweis eines Erregers, einer Substanz oder eines Wirkstoffs basiert, sondern sich die Erkennung der Zusammensetzung von Körperflüssigkeiten (z.B. Blutbild/Blut-Zusammensetzung) nutzbar macht, die z.B. durch Autoimmunreaktionen (z.B. Multiple Sklerose), Futterzusatzmittel, Amyloide (Alzheimer-Morbus) oder Prionen (TSE, engl. "transmissible spongiform encephalopathy"), welche den Stoffwechsel des erkrankten Tieres/Menschen beeinflussen, verändert ist. Erfindungsgemäß wird beispielsweise ein Schnelltest auf BSE bereitgestellt, der nicht auf dem direkten Nachweis der BSE-Erreger basiert, sondern sich die Erkennung der Zusammensetzung von Körperflüssigkeiten (z.B. Blutbild) nutzbar macht, die durch das Vorhandensein der Prionen, welche den Stoffwechsel des erkrankten Tieres beeinflussen, verändert ist.

Im Gegensatz zu den bisher an toten Tieren durchführbaren Tests ist das erfindungsgemäße Verfahren am lebenden Organismus durchführbar und erfordert darüber hinaus keine schwerwiegenden Eingriffe. Beispielsweise im Vergleich zu derzeit verfügbaren BSE-Tests, für die etwa sechs bis acht Stunden pro Test veranschlagt werden müssen, kann das erfindungsgemäße Verfahren mit bis zu 5.000 Messungen pro Tag und Apparatur sehr schnell durchgeführt werden. Die Vermeidung von hohem Personal- und Kostenaufwand ermöglicht es, eine erhebliche Kostensenkung in Bezug auf die Einzelmessung zu erreichen.

Das erfindungsgemäß eingesetzte Multiparameteranalyseverfahren zur Klassifizierung der Proben zu bekannten Zuständen und zum Vergleich der unbekannten Probe kann regelmäßig veränderten Bedingungen angepaßt und bezüglich konstanter Bedingungen optimiert werden. Falls beispielsweise neue Varianten eines Krankheitserregers auftauchen, die z.B. einem herkömmlichen Antikörpertest nicht zugänglich sind (Antikörper, die nur auf eine bestimmte pathogene Form reagieren, nicht aber auf eine veränderte pathogene Variante), kann das Multiparamteranalyseverfahren, z.B. ein neuronales Netz, an die veränderte Bedingung angepaßt werden. Dadurch werden falsch negative Testergebnisse vermieden, wie sie aufgrund eines Polymorphismus eines Krankheitserregers bei hochspezifischen Antikörpertests häufig vorkommen, da hierbei eine neue Isoform des Erregers oft nicht erkannt wird. Im Gegensatz dazu wird daher das erfindungsgemäße Verfahren durch einen Polymorphismus eines Erregers nicht beeinträchtigt.

Des weiteren werden insbesondere bei der Verwendung von HPLC-Komponenten nur sehr geringe Probenmengen (< 20 µl) benötigt.

Die Messung von Proben in ihrem nativen Zustand ermöglicht darüber hinaus eine sehr viel zuverlässigere Zuordnung, d.h. die Vermeidung falsch positiver und falsch negativer Testergebnisse, als bei Verfahren, bei denen die IR-Messung an getrockneten Proben, wie beispielsweise getrockneten Filmen der Proben, durchgeführt wird. Dadurch ist es möglich, insbesondere bei der Erkennung epidemiologisch signifikanter krankhafter Zustände wie BSE, eine sehr kleine Fehlerrate zu erreichen.

Das erfindungsgemäße Verfahren weist gegenüber aus dem Stand der Technik bekannten Verfahren, bei denen IR-Messungen an Biofilmen durchgeführt werden insbesondere die folgenden Vorteile auf:
- Wasser spielt bei der Stabilisierung der räumlichen Struktur von Biomolekülen eine wesentliche Rolle. Im nativen Zustand sind die löslichen Biomoleküle von einer Hydrathülle umgeben, die mit den ionischen oder polaren funktionellen Gruppen in konformationsstabilisierender Wechselwirkung steht. Auch im Innern des Molekülgerüsts wirkt Wasser durch Wasserstoffbrückenbindungen stabilisierend und formgebend auf die räumliche Struktur des Biomoleküls. Dehydratisierung in Form von getrockneten Biofilmen kann hier zu entscheidenden strukturellen Änderungen durch intermolekulare Wechselwirkungen mit den Nachbarmolekülen führen.
- Der native Zustand einer Körperflüssigkeit und damit die native Konformation der gelösten Komponenten liegt beim erfindungsgemäßen Verfahren, nicht aber bei der Messung an getrockneten Biofilmen vor. Beispielsweise kann eine Krankheit bzw. die Zustandsänderung einer Körperflüssigkeit durch die Konformationsänderung eines Proteins verursacht sein. Hier kann eine Unterscheidung nur durch den Vergleich der nativen mit der pathogenen Konformation einen Nachweis erbringen. In getrockneten Biofilmen kann durch die Dehydratisierung, die native bzw. pathogene Konformation verändert oder zerstört werden, wodurch eine Unterscheidung schwieriger bzw. unmöglich wird.
- Ein Biofilm zeigt unterschiedliche Dehydratisierungszustände in Abhängigkeit von der Schichtdicke bzw. im Abstand zur Außenschicht. Im Innern des Films ist die Dehydratisierung weniger fortgeschritten als am Rand. Ursache hierfür ist, dass Wasser aus dem Innern nur langsam durch Diffusion durch die darüberliegende Schicht nach außen gelangen kann.
- Unterschiedliche Dehydratisierungszustände in einer Probe führen zu unterschiedlichen bzw. unterschiedlich stark ausgeprägten intra- und intermolekularen Wechselwirkungen mit benachbarten Atomen oder funktionellen Gruppen, so dass es zu einem Bandenshift (Absorptionsmaximum wird zu einer anderen Wellenzahl verschoben) kommt. D.h. der für eine funktionelle Gruppe charakteristische Absorptionspeak und der Extinktionskoeffizient ist abhängig vom Dehydratisierungsgrad. Unterschiedliche Dehydratisierungszustände in einer Probe führen daher zu einer Linienverbreiterung durch viele leicht gegeneinander verschobene Peaks und damit nachteilhafterweise zu einer geringeren Spektralinformation.
- Ferner muss die zu klassifizierende Probenmessung den gleichen Dehydratisierungszustand aufweisen wie die zum Trainieren (Kalibrieren) der multivariaten Datenanalyse verwendeten Datensätze, da sonst aufgrund des ungleichen Bandenshifts keine eindeutige Bandenzuordnung durchgeführt werden kann.
- Biofilme weisen aufgrund des Trocknungsprozesses eine inhomogene Zusammensetzung auf. Dadurch ist die Reproduzierbarkeit der Messungen schlechter.
- Für eine gute Reproduzierbarkeit und geringe Zuordnungsfehlerquote müssen bei der Präparation von Biofilmen einheitlich zu den Kalibrierungsdatensätzen folgende Parameter optimiert werden:
   - Trocknungsdauer
   - Trocknungsgradient
   - Trocknungstemperatur
   - Auftragsmenge
   - Auftragsdicke
   - Trägermaterial (Benetzung)
   - Filmoberflächen (z.B. Krümmung, Rauhigkeit usw.) (wichtig für Transmissions/Reflexions/Streuungs-Verhältnis)
   - Art des Auftrags (beispielsweise besteht ein Unterschied, ob einmal dick oder mehrmals dünn mit Trocknungsphasen zwischen den dünnen Aufträgen aufgebracht wird). Ansonsten resultiert eine schlechtere Reproduzierbarkeit und eine höhere Zuordnungsfehlerquote.
- Die vorstehend genannten Probleme der Messung an Biofilmen lassen sich nur durch aufwendige, kostenintensive Dosier-, Temperier- und Regelungstechniken einigermaßen kontrollieren. Für einen breiten Einsatz oder für einen "Point of Care"-Einsatz sind die im Stand der Technik bekannten Verfahren daher ungeeignet.
- Zur besseren Reproduzierbarkeit sollte ebenfalls die Spektrenaufnahme der zu klassifizierenden Proben mit der gleichen Messtechnik aufgenommen werden, wie bei den Kalibrierungsdatensätzen. Zur Aufnahme von getrockneten Biofilmen sind jedoch viele Techniken verbreitet, beispielsweise Transmission, Reflexion oder diffuse Reflexion, deren Daten sich nicht mit ausreichender Genaugkeit vergleichen lassen.
- Eine elektrochemische Differenzanalyse ist nur sinnvoll, wenn die redox-aktiven Komponenten noch ihre native Konformation beinhalten, die anhand des redox-Vorganges charakteristische, hochspezifische Strukturänderungen durchlaufen (vgl. Moss A. D., Nabedryk, E., Breton, J. and Mäntele, W. (1990) Eur. J. Biochem. 187, 565-572). In Biofilmen liegen die Moleküle jedoch dehydratisiert vor, weshalb hier nicht von einer "nativen" Probe gesprochen werden kann.
- Zur Eichung der Spektren wird den Biofilmen meist eine Eichsubstanz zugefügt. Diese Eichung ist beim erfindungsgemäßen Verfahren nicht erforderlich.

Das erfindungsgemäße Verfahren ist von der vorstehend erläuterten Problematik der Probenaufbereitung nicht betroffen. Die Aufbereitungsschritte der meisten Körperflüssigkeiten (wenn überhaupt notwendig) sind standardisiert und zudem liegen die gelösten Substanzen der Körperflüssigkeit bei den jeweiligen Organismen in überwiegend ähnlicher Konzentration vor, so dass zum einen der native Charakter der Körperflüssigkeit erhalten bleibt und zum anderen ein direkter Vergleich der Proben möglich ist. Gegebenfalls ist eine Normierung der Daten bezüglich der Schichtdicke der verwendeten Messzelle auf die Schichtdicke der Referenzmesszelle notwendig. Daher eignet sich das erfindungsgemäße Verfahren aufgrund der Möglichkeit der Erstellung multivariater Parametersätze bezüglich einer bestimmten Krankheit (bzw. Zustandsänderung einer biologischen Flüssigkeit) in Zusammenhang mit der guten Reproduzierbarkeit bezüglich der Messtechnik hervorragend für einen breiten Einsatz.

Die Figuren zeigen:
- Fig. 1: ist eine schematische Darstellung einer zur Durchführung des erfindungsgemäßen Verfahrens geeigneten Vorrichtung.
- Fig. 2: ist eine graphische Darstellung der elektrochemisch induzierten FTIR-Differenzspektren von normalem menschlichem Hämoglobin (Hb_{A}) und des Sichelzellanämie-Hämoglobins (Hb_{S}).
- Fig. 3: ist eine graphische Darstellung des IR-Gesamtabsorptionsspektrums von menschlichem Blutserum. Es wurde eine Dünnschicht-Durchflußzelle (Schichtdicke etwa 6 µm) verwendet.
- Fig. 4: ist eine graphische Darstellung der zweiten Ableitung von 5 IR-Spektren des Blutserums eines menschlichen Patienten.
- Fig. 5 (A): ist eine graphische Darstellung der zweiten Ableitung von IR-Spektren des Blutserums von 5 verschiedenen menschlichen Patienten und (B) zeigt die im Wellenzahlbreich von 1.680 bis 1.800 cm⁻¹ übereinander gelegten Spektren von (A).
- Fig. 6(A): zeigt Absorptionsspektren von Liquor-Proben von Patienten mit und ohne Multiple Sklerose und (B) zeigt die zweite Ableitung dieser Absorptionsspektren.

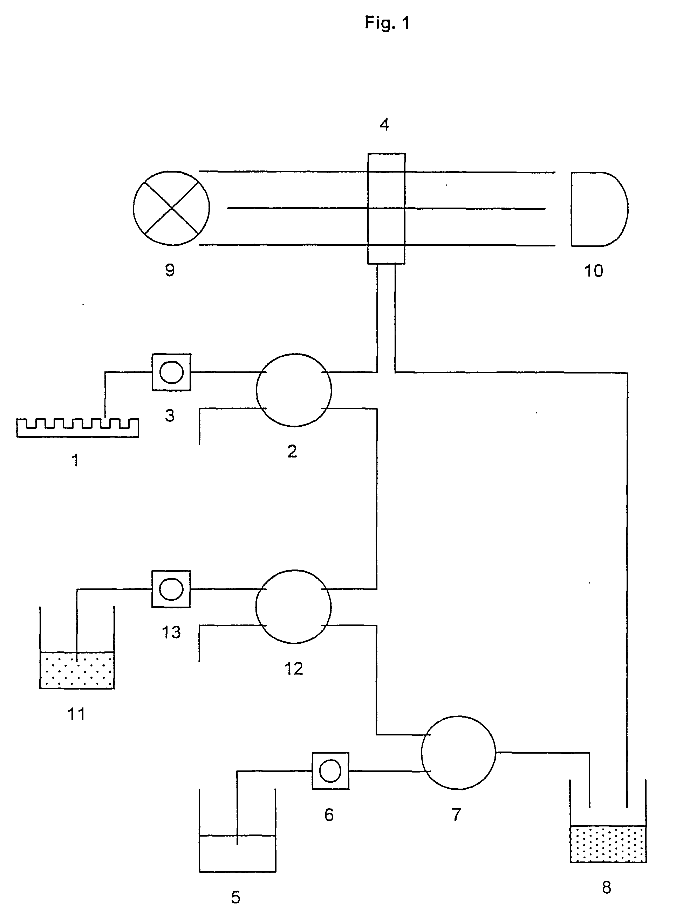

Das erfindungsgemäße Verfahren kann beispielsweise mit Hilfe der in der Fig. 1 gezeigten Vorrichtung wie folgt durchgeführt werden:
- Die Proben können manuell (halbautomatisierte Anlage) oder über Mikrotiterplatten (1) (vollautomatisierte Anlage) vorgelegt werden.
- Die Proben werden in ein Injektionsventil (2) aus der Vorlage aufgenommen.
- Die Proben aus den Mikrotiterplatten (1) werden sequentiell über eine Pumpe (3) aufgenommen.
- Die Probenaufgabe in die Durchflussmesszelle (4) erfolgt durch das Injektionsventil (2).
- Die Probe wird dabei über das Schalten des Injektionsventils (2) in ein Transportmedium (5) (z.B. Wasser oder eine wässerige Pufferlösung) eingespeist und in die Durchflussmesszelle (4) transportiert.
- Das Transportmedium (5) wird durch eine weitere Pumpe (6) angetrieben (vorzugsweise eine HPLC-Pumpe).
- Befindet sich die Probe in der Messzelle (4) wird der Fluss des Transportmediums (5) durch ein Steuerungsventil (7) beispielsweise in ein Abfallgefäß (8) umgeleitet und so der Fluss durch die Messzelle (4) gestoppt.
- Die Messzelle (4) ist in einem IR-Spektrometer (oder IR-Mikroskop) integriert, mit dessen Hilfe ein oder mehrere IR-Spektren aufgenommen werden können. Während der Messung findet kein Fluss durch die Messzelle (4) statt.
- Von einer IR-Lichtquelle (9) wird Licht durch die Probe zur Aufnahme von IR-Spektren geleitet und mit einem Detektor (10) genommen.
- Gegebenenfalls wird eine Reduktion oder Oxidation der Probe vorgenommen. Für verschiedene angelegte Potentialzustände wird jeweils mindestens ein IR-Spektrum aufgenommen.
- Anschließend wird die Probe durch erneutes Schalten des Steuerungsventils (7) mit Transportmedium (5) vollständig aus der Zelle (4) in ein Abfallgefäß (8) gespült.
- Gegebenenfalls kann die Zelle (4), die Probenschleife und die probendurchströmten Zuleitungen mit einer Reinigungslösung (11), beispielsweise SDS/6 M Guanidiniumhydrochlorid, gereinigt werden. Die Aufgabe der Reinigungslösung (11) erfolgt vorzugsweise über ein zweites Injektionsventil (12) zwischen dem Steuerungsventil (7) und dem ersten Injektionsventil (2) über eine weitere Pumpe (13).
- In der Regel wird nach dem Spülen (Zelle (4) ist vollständig mit Transportmedium (5) gefüllt) ein Referenzspektrum im gestoppten Zustand aufgenommen. Dabei dient das Transportmedium (5) als konstant bleibende Referenz.
- Gegebenenfalls kann das Injektionsventil (2) vor, während und/oder nach der Probenmessung geschaltet und die Probenschleife neu befüllt werden. Vorzugsweise wird das Injektionsventil (2) vor der Messung geschaltet und neu befüllt. Dadurch wird der Probendurchsatz nahezu ausschließlich durch die Messdauer (in der Regel 15-30 Sekunden) begrenzt und das System eignet sich somit zur Automation bei großer Probenanzahl.
- Die Auswertung der erhaltenen IR-Spektren erfolgt mittels multivariater Datenanalyse.
- Es erfolgt schließlich die Zuordnung der Probe zu einer Gruppe der multivariaten Datenanalyse.

Vorzugsweise ist die Anlage aus HPLC-Komponenten aufgebaut.

Nachstehend wird die vorliegende Erfindung weiter anhand der folgenden nichteinschränkenden Beispiele näher erläutert.

### BEISPIELE

### Elektrochemisch induzierte Differenzanalyse von Hämoglobin

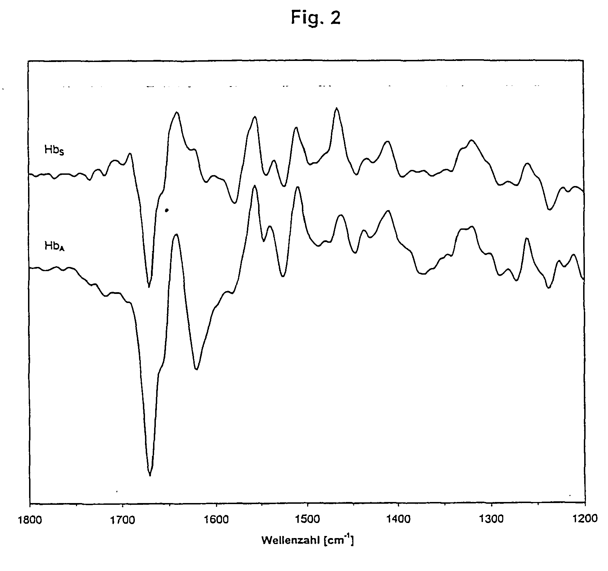

Es wurden Lösungen von normalem, menschlichem Hämoglobin (Hb_{A}) und Sichelzellanämie-Hämoglobin (Hb_{S}) hergestellt. Davon wurden mittels eines FTIR-Spektrometers in einer Dünnschichtzelle elektrochemisch induzierte Differenzspektren ermittelt. Die Differenzspektren sind in der Fig. 2 gezeigt. Beide Spektren zeigen in bestimmten Absorptionsbereichen eine gute Übereinstimmung, in anderen jedoch ist ein deutlicher, für Sichelzellanämie-Hämoglobin charakteristischer Unterschied erkennbar. Somit stellt das erfindungsgemäße Verfahren eine schnell und universell einsetzbare Nachweismethode, z.B. für diagnostische Zwecke im klinischen Bereich, bereit, da die elektrochemisch induzierte Differenzanalyse auf alle redox-aktiven Substanzen in biologischen Flüssigkeiten anwendbar ist.

### FTIR-Messung von menschlichen Blutseren

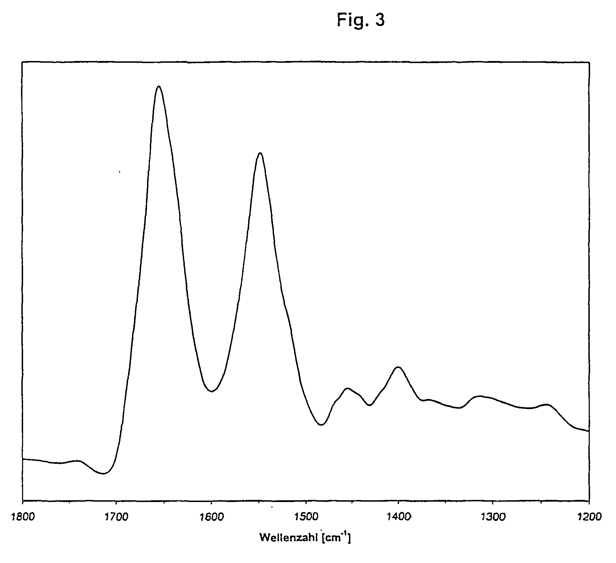

Es wurde mittels einer Dünnschicht-Durchflußzelle (Schichtdicke 6 µm) ein Gesamtabsorptionsspektrum aufgenommen (Fig. 3).

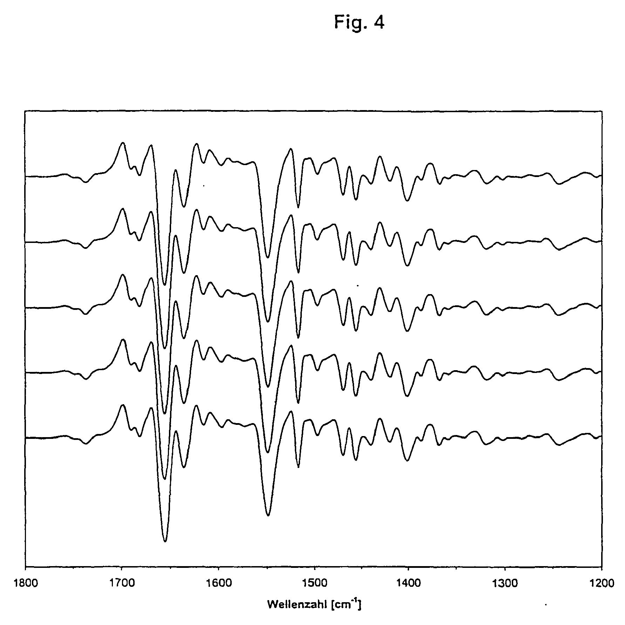

Die Reproduzierbarkeit von IR-Spektren (zweite Ableitung) wurde anhand von menschlichem Blutserum mit Hilfe derselben Meßvorrichtung untersucht. Hierzu wurden 5 Proben des gleichen Patienten in die Meßapparatur eingespritzt und gemessen. Die Spektren der Fig. 4 zeigen eine hervorragende Reproduzierbarkeit, die von Messungen an Biofilmen nicht erreicht wird.

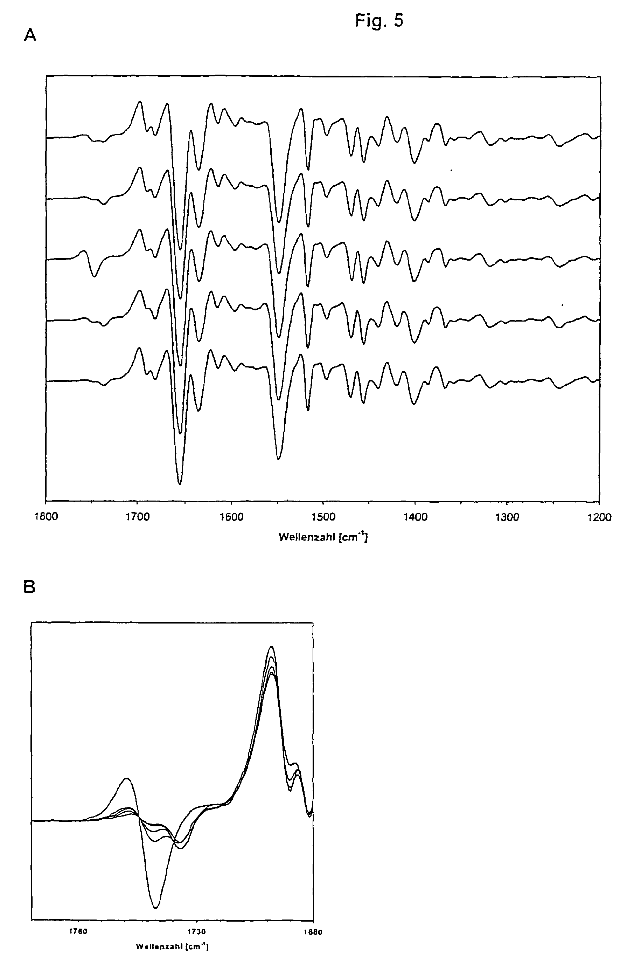

Die Fig. 5A zeigt IR-Spektren (zweite Ableitung) von 5 verschiedenen menschlichem Blutseren, welche ebenfalls mit der obigen Dünnschicht-Durchflußzelle aufgenommen wurden. Es zeigt sich, daß die Spektren der Proben unterschiedlicher Patienten in bestimmten Bereichen deutliche Unterschiede aufweisen. Dies wird beispielsweise im Bereich von 1.680 bis 1.800 cm⁻¹ besonders deutlich, wenn die Spektren übereinander gelegt werden (Fig. 5B).

### FTIR-Messungen von menschlichen Liquor- und Serumproben von Patienten mit Multiple-Sklerose

Aus einer umfangreichen Human-Datenbank wurden sowohl Liquor als auch Serum von Multipler Sklerose erkrankten Patienten mittels der oben beschriebenen Methode gemessen. Die gefroren archivierten Proben -frische Proben können ebenfalls eingesetzt werden- wurden im aufgetauten, flüssigen Zustand in einer Anlage mit einer Dünnschichtzelle vermessen. Im einfachsten Fall können diese Proben direkt verwendet werden. Eine Optimierung kann durch eine geeignete Vorbehandlung der Proben erreicht werden. Für die anschließende Datenauswertung mittels chemometrischer Verfahren können entweder direkt die aufgenommenen Absorptionsspektren oder aber auch deren zweite Ableitung eingesetzt werden. Für die Auswertung der Spektren kann es sinnvoll sein, den Spektralbereich der Messungen auf 700 cm⁻¹ bzw. 3000 cm⁻¹ zu vergrößern, da hierdurch der Informationsgehalt erhöht wird.

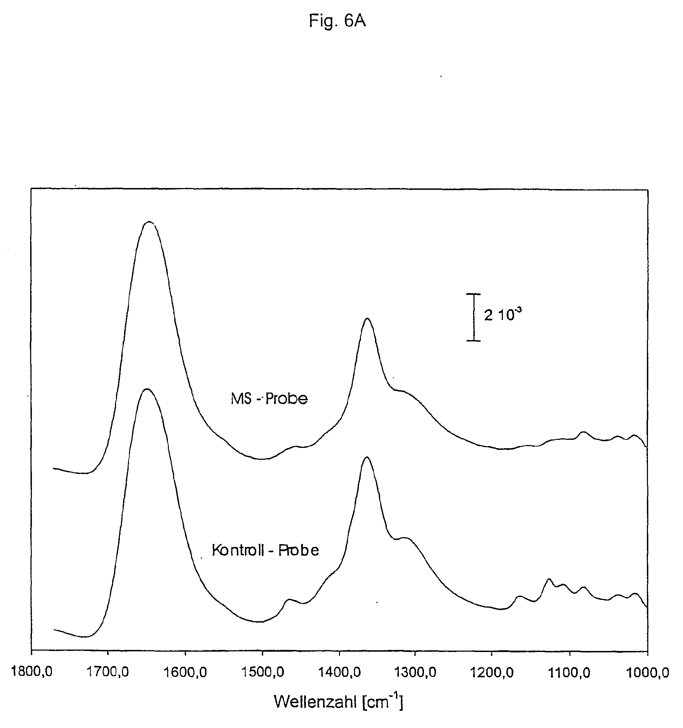

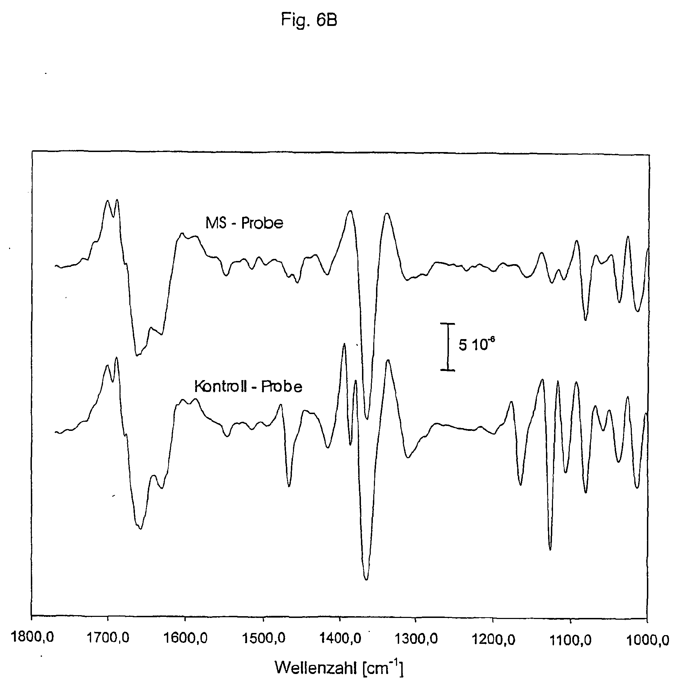

Die Figuren 6 (A) und (B) zeigen am Beispiel von Liquor jeweils Messungen von Patienten mit und ohne Multiple Sklerose.

## Patentansprüche

1. Verfahren zur Bestimmung des Zustands einer biologischen Flüssigkeit, umfassend die Schritte
(a) Bereitstellen einer Mehrzahl nativer Proben der sich in verschiedenen Zuständen befindenden biologischen Flüssigkeit, bei denen jeweils der Zustand der biologischen Flüssigkeit bekannt ist und einer als Transportmedium dienenden, Konstant bleibenden Referenzprobe
(b) Messen der IR-Spektren der nativen Proben und der Referenzprobe von Schritt (a),
(c) Unterwerfen der IR-Spektren von Schritt (b) einem Multiparameteranalyseverfahren und Auswählen von Zuordnungsparametern, die eine zuverlässige Zuordnung der Proben zu ihrem jeweils bekannten Zustand gewährleisten,
(d) Speichern der im Schritt (c) erhaltenen Zuordnungsparameter,
(e) Bereitstellen einer unbekannten nativen Probe der biologischen Flüssigkeit, deren Zustand unbekannt ist,
(f) Messen mindestens eines IR-Spektrums der nativen Probe von Schritt (e) und der Referenzprobe
(g) Unterwerfen des IR-Spektrums von Schritt (f) einer Multiparameteranalyse und
(h) Vergleichen der Zuordnungsparameter des IR-Spektrums der unbekannten Probe mit den im Schritt (d) gespeicherten Zuordnungsparametern der IR-Spektren der bekannten Proben,
wobei das Messen der IR-Spektren in den Schritten (b) und (f) mit Hilfe einer Meßzelle durchgeführt wird, die eine Schichtdicke von nicht mehr als 30 µm und bei der Spektrenaufnahme eine Schichtdickenabweichung von weniger als 1 nm aufweist.

2. Verfahren zur Herstellung einer Sammlung von Zuständen biologischer Flüssigkeiten, umfassend die Schritte
(a) Bereitstellen einer Mehrzal nativer Proben der sich in verschiedenen Zuständen befindenden biologischen Flüssigkeiten, bei denen jeweils die Zustände der biologischen Flüssigkeiten bekannt sind, und einer als Transportmedium dienende, Konstant bleibende Referenzprobe
(b) Messen der IR-Spektren der nativen Proben und der Referenzprobe von Schritt (a),
(c) Unterwerfen der IR-Spektren von Schritt (b) einem Multiparameteranalyseverfahren und Auswählen von Zuordnungsparametern, die eine zuverlässige Zuordnung der Proben zu ihrem jeweils bekannten Zustand gewährleisten, und
(d) Speichern der im Schritt (c) erhaltenen Zuordnungsparameter
wobei das Messen der IR-Spektren in Schritt (b) mit Hilfe einer Meßzelle durchgeführt wird, die eine Schichtdicke von nicht mehr als 30 µm und bei der Spektrenaufnahme eine Schichtdickenabweichung von weniger als 1 nm aufweist.

3. Verfahren zur Bestimmung des Zustands einer biologischen Flüssigkeit, umfassend die Schritte
(e) Bereitstellen einer nativen Probe einer biologischen Flüssigkeit, deren Zustand unbekannt ist, und einer als Transportmedium dienenden Konstant bleibenden Referenzprobe,
(f) Messen eines IR-Spektrums der nativen Probe einer biologischen Flüssigkeit, und der Referenzprobe,
(g) Unterwerfen des IR-Spektrums von Schritt (f) einer Multiparameteranalyse und
(h) Vergleichen von Zuordnungsparameter des IR-Spektrums der unbekannten Probe mit Zuordnungsparametern der IR-Spektren von bekannten Proben,
wobei das Messen der IR-Spektren in Schritt (f) mit Hilfe einer Meßzelle durchgeführt wird, die eine Schichtdicke von nicht mehr als 30 µm und bei der Spektrenaufnahme eine Schichtdickenabweichung von weniger als 1 nm aufweist.

4. Verfahren nach einem der Ansprüche 1 bis 3, wobei das Bereitstellen der nativen Probe(n) im Schritt (a) und/oder Schritt (e) das Homogenisieren der biologischen Flüssigkeit und/oder das Befreien der biologischen Flüssigkeit von partikulären Bestandteilen umfaßt.

5. Verfahren nach einem der vorhergehenden Ansprüche, wobei das Messen der IR-Spektren im Schritt (b) und/oder Schritt (f) bei einer Wellenzahl von 400 bis 7.000 cm⁻¹ durchgeführt wird.

6. Verfahren nach einem der vorhergehenden Ansprüche, wobei die Messung der IR-Spektren im Schritt (b) und/oder Schritt (f) mit Hilfe eines FTIR-Spektrometers und/oder FTIR-Mikroskops erfolgt.

7. Verfahren nach einem der vorhergehenden Ansprüche, wobei die Messung der IR-Spektren im Schritt (b) und/oder Schritt (f) mit Hilfe einer Meßzelle mit einer Schichtdicke von 3 bis 12 µm durchgeführt wird.

8. Verfahren nach einem der vorhergenden Ansprüche, wobei das Multiparameteranalyseverfahren eine Diskriminanzanalyse, ein neuronales Netz oder eine Clusteranalyse ist.

9. Verfahren nach einem der vorhergehenden Ansprüche, wobei die Meßzelle darin integrierte Elektroden zur Reduktion und/oder Oxidation von Biomolekülen der Probe aufweist.

10. Verfahren nach einem der vorhergenden Ansprüche, wobei die biologische Flüssigkeit eine Körperflüssigkeit eines Organismus ist.

11. Verfahren nach einem der vorhergenden Ansprüche, wobei die Körperflüssigkeit aus der Guppe, bestehend aus Blut, Blutplasma, Blutserum, Hämolysat, Liquor, Urin, Speichel, Sperma, Lymphflüssigkeit, Synovialflüssigkeit, Fruchtwasser, Tränenflüssigkeit, Zystenflüssigkeit, Schweißdrüsensekret und Gallenflüssigkeit ausgewählt ist.

12. Verfahren nach Anspruch 10 oder 11, wobei der Organismus aus der Gruppe, bestehend aus *Bos taurus, Gallus gallus, Maleagris gallopavo, Mus musculus, Ovis ammon, Rattus norvegicus, Sus scrofa* und *Homo sapiens,* ausgewählt ist.

13. Verfahren nach einem der Ansprüche 10 bis 12, wobei die Probe mit unbekanntem Zustand einem krankhaften oder nicht-krankhaften Zustand und/oder einem Stadium oder Grad des krankhaften Zustands zugeordnet wird.

14. Verfahren nach Anspruch 13, wobei der krankhafte Zustand aus der Gruppe, bestehend aus Diabetes, Arthritis, erhöhtem Cholesterinspiegel, Anämien, Gewebsuntergang, Krebs, Leberkrankheiten, Nierenkrankheiten Myokardinfarkt, AIDS, Allergien, Ortikaria, allergisches Asthma, Autoimmunkrankheiten, neurodegenerativen Erkrankungen und TSE, ausgewählt ist.

15. Verfahren nach Anspruch 13, wobei der krankhafte Zustand durch Futtermittel und/oder Futtermittelzusatzstoffe in der Tiermast verursacht wird.

16. Verfahren nach einem der Ansprüche 1 bis 15, wobei die Probe mit unbekanntem Zustand dem Vorliegen eines bestimmten Zelltyps, eines bestimmten Bakterienstamms oder eines bestimmten Virusstamms zugeordnet wird.

## Claims

1. Method of determining the state of a biological fluid, comprising the steps of
(a) providing a plurality of native samples of various states of the biological fluid for each of which samples the state of the biological fluid is known, and a constant reference sample serving as transportation medium,
(b) measuring the IR spectra of the native samples and of the reference sample of step (a),
(c) subjecting the IR spectra of step (b) to a multiparameter analytical procedure and selecting assignment parameters which ensure reliable assignment of the samples to their particular known state,
(d) storing the assignment parameters obtained in step (c),
(e) providing an unknown native sample of the biological fluid whose state is unknown,
(f) measuring at least one IR spectrum of the native sample of step (e) and of the reference sample,
(g) subjecting the IR spectrum of step (f) to a multiparameter analysis and
(h) comparing the assignment parameters of the IR spectrum of the unknown sample with the assignment parameters, stored in step (d) of the IR spectra of the known samples,
the measuring of the IR spectra in steps (b) and (f) being performed with the aid of a measuring cell which has a path length of not more than 30 µm and, during the recording of spectra, a path length deviation of less than 1 nm.

2. Method of preparing a collection of states of biological fluids, comprising the steps of
(a) providing a plurality of native samples of various states of the biological fluid for each of which the state of the biological fluid is known, and a constant reference sample serving as transportation medium,
(b) measuring the IR spectra of the native samples and of the reference sample of step (a),
(c) subjecting the IR spectra of step (b) to a multiparameter analytical procedure and selecting assignment parameters which ensure reliable assignment of the samples to their particular known state, .
(d) storing the assignment parameters obtained in step (c),
the measuring of the IR spectra in step (b) being performed with the aid of a measuring cell which has a path length of not more than 30 µm and, during the recording of spectra, a path length deviation of less than 1 nm.

3. Method of determining the state of a biological fluid, comprising the steps of
(e) providing a native sample of a biological fluid whose state is unknown, and a constant reference sample serving as transportation medium,
(f) measuring an IR spectrum of the native sample of a biological fluid and of the reference sample,
(g) subjecting the IR spectrum of step (f) to a multiparameter analysis and
(h) comparing assignment parameters of the IR spectrum of the unknown sample with assignment parameters of the IR spectra of known samples,
the measuring of the IR spectra in step (f) being performed with the aid of a measuring cell which has a path length of not more than 30 µm and, during the recording of spectra, a path length deviation of less than 1 nm.

4. Method according to any one of Claims 1 to 3, wherein the providing of the native sample or samples in step (a) and/or step (e) comprises homogenizing the biological fluid and/or freeing the biological fluid of particulate constituents.

5. Method according to any one of the preceding claims, wherein the measuring of the IR spectra in step (b) and/or step (f) is carried out at a wavenumber of 400 to 7000 cm⁻¹.

6. Method according to any one of the preceding claims, wherein the measurement of the IR spectra in step (b) and/or step (f) is effected with the aid of an FTIR spectrometer and/or FTIR microscope.

7. Method according to any one of the preceding claims, wherein the measurement of the IR spectra in step (b) and/or step (f) is carried out with the aid of a measuring cell having a path length of 3 to 12 µm.

8. Method according to any one of the preceding claims, wherein the multiparameter analytical procedure is a discriminance analysis, a neuronal network or a cluster analysis.

9. Method according to any one of the preceding claims, wherein the measuring cell comprises integrated electrodes for reducing and/or oxidizing biomolecules of the sample.

10. Method according to any one of the preceding claims, wherein the biological fluid is a bodily fluid of an organism.

11. Method according to any one of the preceding claims, wherein the bodily fluid is selected from the group consisting of blood, blood plasma, blood serum, haemolysate, spinal fluid, urine, saliva, sperm, lymph, synovial fluid, amniotic fluid, lachrymal fluid, cyst fluid, sweat gland secretion and bile.

12. Method according to Claim 10 or 11, wherein the organism is selected from the group consisting of *Bos taurus, Gallus gallus, Maleagris gallopavo, Mus musculus, Ovis ammon, Rattus norvegious, Sus scrofa* and *Homo sapiens.*

13. Method according to any one of Claims 10 to 12, wherein the sample of unknown state is assigned to a pathological or non-pathological state and/or a stage or degree of the pathological state.

14. Method according to Claim 13, wherein the pathological state is selected from the group consisting of diabetes, arthritis, elevated cholesterol level, anaemia, tissue destruction, cancer, liver diseases, kidney diseases, myocardial infarction, AIDS, allergies, urticaria, allergic asthma, autoimmune diseases, neurodegenerative diseases and TSE.

15. Method according to Claim 13, wherein the pathological state is caused by feed and/or feed additives used in animal husbandry.

16. Method according to any one of Claims 1 to 15, wherein the sample of unknown state is assigned to the presence of a certain cell type, of a certain bacterial strain or of a certain viral strain.

## Revendications

1. Procédé de détermination de l'état d'un liquide biologique, comprenant les étapes consistant à
(a) mettre à disposition une multiplicité d'échantillons natifs de liquide biologique se trouvant en différents états, dans lesquels l'état respectif du liquide biologique et d'un échantillon de référence restant constant, servant de milieu de transport, est connu,
(b) mesurer les spectres IR des échantillons natifs et de l'échantillon de référence de l'étape (a)
(c) soumettre les spectres IR de l'étape (b) à un procédé d'analyse à paramètres multiples et choisir des paramètres d'affectation qui assurent une affectation fiable des échantillons à leur état respectif connu,
(d) enregistrer les paramètres d'affectation obtenus à l'étape (c),
(e) mettre à disposition un échantillon natif inconnu de liquide biologique dont l'état est inconnu,
(f) mesurer au moins un spectre IR de l'échantillon natif de l'étape (e) et de l'échantillon de référence,
(g) soumettre le spectre IR de l'étape (f) à une analyse à paramètres multiples et
(h) comparer le paramètre d'affectation du spectre IR de l'échantillon inconnu avec les paramètres d'affectation enregistrés à l'étape (d) des échantillons connus,
la mesure des spectres IR aux étapes (b) et (f) étant réalisée à l'aide d'une cellule de mesure qui présente une épaisseur de couche ne dépassant pas 30 µm et qui présente lors de l'enregistrement des spectres, un écart d'épaisseur de couche inférieur à 1 nm.

2. Procédé de production d'une collection d'états de liquides biologiques, comprenant les étapes consistant à
(a) mettre à disposition une multiplicité d'échantillons natifs de liquide biologique se trouvant en différents états, dans lesquels les états respectifs des liquides biologiques sont connus et d'un échantillon de référence restant constant, servant de milieu de transport,
(b) mesurer les spectres IR des échantillons natifs et de l'échantillon de référence de l'étape (a)
(c) soumettre les spectres IR de l'étape (b) à un procédé d'analyse à paramètres multiples et choisir des paramètres d'affectation qui assurent une affectation fiable des échantillons à leur état respectif connu, et
(d) enregistrer les paramètres d'affectation obtenus à l'étape (c),
la mesure des spectres IR à l'étape (b) étant réalisée à l'aide d'une cellule de mesure qui présente une épaisseur de couche ne dépassant pas 30 µm et qui présente lors de l'enregistrement des spectres, un écart d'épaisseur de couche inférieur à 1 nm.

3. Procédé de détermination de l'état d'un liquide biologique comprenant les étapes consistant à
(e) mettre à disposition un échantillon natif d'un liquide biologique dont l'état est inconnu et un échantillon de référence restant constant, servant de milieu de transport,
(f) mesurer un spectre IR de l'échantillon natif d'un liquide biologique et de l'échantillon de référence,
(g) soumettre le spectre IR de l'étape (f) à une analyse à paramètres multiples et
(h) comparer les paramètres d'affectation du spectre IR de l'échantillon inconnu avec les paramètres d'affectation des spectres IR des échantillons connus,
la mesure des spectres IR à l'étape (f) étant réalisée à l'aide d'une cellule de mesure qui présente une épaisseur de couche ne dépassant pas 30 µm et qui présente lors de l'enregistrement des spectres, un écart d'épaisseur de couche inférieur à 1 nm,

4. Procédé selon l'une quelconque des revendications 1 à 3, dans lequel la mise à disposition du/des échantillon(s) natif(s) à l'étape (a) et/ou à l'étape (e) comprend l'homogénéisation du liquide biologique et/ou la libération du liquide biologique des composants particulaires.

5. Procédé selon l'une quelconque des revendications précédentes, dans lequel la mesure des spectres IR de l'étape (b) et/ou de l'étape (f) est réalisée à un nombre d'ondes de 400 à 7000 cm⁻¹.

6. Procédé selon l'une quelconque des revendications précédentes, dans lequel la mesure des spectres IR de l'étape (b) et/ou de l'étape (f) est réalisée à l'aide d'un spectromètre à transformation de Fourier et/ou d'un microscope à transformation de fourier.

7. Procédé selon l'une quelconque des revendications précédentes, dans lequel la mesure des spectres IR de l'étape (b) et/ou de l'étape (f) est réalisée à l'aide d'une cellule de mesure présentant une épaisseur de couche de 3 à 12 µm.

8. Procédé selon l'une quelconque des revendications précédentes, dans lequel le procédé d'analyse à paramètres multiples est une analyse discriminante, un réseau neuronal ou une analyse de cluster.

9. Procédé selon l'une quelconque des revendications précédentes, dans lequel la cellule de mesure présente des électrodes intégrées pour la réduction et/ou l'oxydation de biomolécules de l'échantillon.

10. Procédé selon l'une quelconque des revendications précédentes, dans lequel le liquide biologique est un liquide corporel d'un organisme.

11. Procédé selon l'une quelconque des revendications précédentes, dans lequel le liquide corporel est choisi dans les groupes comprenant le sang, le plasma sanguin, le sérum sanguin, les hémolysats, le liquide céphalo-rachidien, l'urine, la salive, le sperme, le liquide lymphatique, le liquide synovial, le liquide amniotique, le liquide lacrymal, les liquides de kystes, les sécrétions des glandes sudoripares et le liquide biliaire.

12. Procédé selon la revendication 10 ou 11, dans lequel l'organisme est choisi dans le groupe comprenant *Bos taurus, Gallus gallus, Maleagris gallopavo, Mus musculus, Ovis ammon, Rattus norvegicus, Sus scrofa* et *Homo sapiens.*

13. Procédé selon l'une quelconque des revendications 10 à 12, dans lequel l'échantillon associé à un état inconnu est affecté à un état pathologique ou non pathologique et/ou un stade ou un degré de l'état pathologique.

14. Procédé selon la revendication 13, l'état pathologique étant choisi dans le groupe comprenant le diabète, l'arthrite, l'hypercholestérolémie, les anémies, la perte tissulaire, le cancer, les affections hépatiques, les affections rénales, l'infarctus du myocarde, le SIDA, les allergies, l'urticaire, l'asthme allergique, les maladies auto-immunes, les maladies neurodégénératives et l'EST.

15. Procédé selon la revendication 13, l'état pathologique étant provoqué par la nourriture et/ou les compléments alimentaires dans l'alimentation des animaux d'élevage.

16. Procédé selon l'une quelconque des revendications 1 à 15, l'échantillon associé à un état inconnu étant affecté à la présence d'un type de cellule déterminé, d'une souche de bactéries déterminée ou d'une souche de virus déterminée.
